# FASCICULE DE BREVET EUROPEEN

(11) **EP 3 771 621 B1**
(45) Date de publication et mention de la délivrance du brevet: **24.08.2022**
(21) Numéro de dépôt: 20187355.1
(22) Date de dépôt: 23.07.2020
(51) Int. Cl.: B62D 25/16, B62D 25/18, B60R 13/08, G10K 11/172

(54) **PARE-BOUE INSONORISANT POUR PASSAGE DE ROUE DE VÉHICULE AUTOMOBILE**
GERÄUSCHDÄMMENDER SCHMUTZFÄNGER FÜR RADKASTEN EINES KRAFTFAHRZEUGS
SOUNDPROOFING MUDGUARD FOR WHEEL ARCH OF A MOTOR VEHICLE

(30) Priorité: 30.07.2019 FR 1908648
(43) Date de publication de la demande: 03.02.2021
(73) Titulaire: NOVARES France, 92140 Clamart (FR)
(72) Inventeur: JEAN, Thomas, 62150 HOUDAIN (FR)
(74) Mandataire: Germain Maureau

(56) Documents cités:
- GB-A- 2 385 567
- JP-A- 2017 105 374
- US-A- 5 462 331
- US-A- 5 839 761
- US-A1- 2010 078 927
- US-B2- 8 919 818

## Description

La présente invention concerne un pare-boue insonorisant pour passage de roue de véhicule automobile.

La carrosserie d'un véhicule automobile présente des passages de roues en forme d'arche, à l'intérieur desquels les roues sont disposées.

Lors de la rotation des roues du véhicule, des ondes acoustiques sont générées du fait du contact entre le pneu et la chaussée. De plus, des ondes acoustiques sont également créées par le rayonnement du pneu lui-même une fois excité par le contact.

Des ondes acoustiques sont également générées par les impacts de gouttelettes d'eau ou de gravillons projetés, par la rotation de la roue, contre la surface du passage de roue, lorsque le véhicule se déplace sur une route humide ou gravillonnée.

En particulier, dans un passage de roue qui constitue une enceinte semi-fermée, on constate qu'une onde acoustique générée par la rotation de la roue est réfléchie sur la surface du passage de roue, d'un point de cette surface à un autre point de cette surface.

Pour certaines longueurs d'ondes, il se produit un phénomène de résonance de cavité, pour des fréquences dites fréquences modales.

Pour ces fréquences, il se produit des ondes stationnaires c'est-à-dire des ondes dont les maximas de pression se situent toujours aux mêmes points.

Pour éviter ce phénomène de résonance de cavité, il convient donc, d'absorber les ondes acoustiques au fur et à mesure de leurs réflexions.

Il est connu de disposer une coque pare-boue en matériau thermoplastique injecté, à l'intérieur d'un passage de roue de véhicule. Cette coque a pour fonction de protéger la tôle de la carrosserie d'agressions chimiques ou mécaniques telles que des impacts de gravillons projetés par la rotation des roues. Toutefois, ces pare-boue n'ont qu'une incidence limitée sur l'absorption des ondes acoustiques.

Le document EP 222 193 propose de disposer à l'intérieur d'un passage de roue de véhicule, une coquille réalisée en un feutre de fibres synthétiques. Cette coquille est mise en forme par thermoformage et est fixée à l'intérieur du passage de roue. Elle permet une diminution de la propagation des ondes acoustiques créées lors du contact du pneu avec la chaussée.

Toutefois pour obtenir une absorption significative des ondes acoustiques, notamment moyennes et hautes fréquences, il convient de déposer une couche de matériau acoustiquement absorbant d'une épaisseur très importante pouvant aller jusqu'à plusieurs centimètres. Or le matériau acoustiquement absorbant est un matériau coûteux. L'emploi de ce matériau augmente considérablement le coût du pare-boue.

En vue de résoudre ce problème, il a été envisagé dans les documents FR 2 808 490 et FR 2 816 266 d'intégrer dans le pare-boue une couche de matériau acoustiquement absorbant disposée de manière à définir une cavité permettant d'absorber des ondes acoustiques dans une gamme de fréquence comprise entre 1000 Hz et 5000 Hz, c'est-à-dire la gamme de signaux sonores qui produit le stress et l'inconfort le plus important pour le conducteur et les passagers présents dans le véhicule. Les documents US 2010/078927 A1 et US 5 462 331 A concernent un pare-boue pour véhicule automobile comprenant une structure d'absorption d'ondes acoustiques de type résonateur Helmholtz. Le document US 2010/078927 A1 divulgue par ailleurs le préambule de la revendication 1.

Les solutions décrites dans ces documents présentent toutefois l'inconvénient de nécessiter une structure hybride pour le pare-boue, intégrant à la fois une coque en matériau thermoplastique injecté et une couche de matériau acoustiquement absorbant en feutre ou en textile. Un pare-boue possédant une telle structure hybride est donc plus complexe à fabriquer. Par ailleurs, ces solutions utilisent toujours un matériau relativement couteux pour absorber les ondes acoustiques. Le coût de fabrication du pare-boue est donc toujours relativement élevé.

Le but de l'invention est de fournir un pare-boue possédant d'excellentes qualités d'insonorisation tout en étant d'un coût industriel économique.

A cet effet, l'invention concerne un pare-boue destiné à être fixé à l'intérieur d'un passage de roue de véhicule automobile, comprenant une coque en matériau thermoplastique présentant une paroi destinée à venir en regard de la surface de roulement de la roue, caractérisé en ce que la paroi comprend au moins une zone munie d'une pluralité de trous, ladite zone étant destinée à former un résonateur de Helmholtz avec une partie de la caisse du véhicule entourant au moins partiellement la coque, ladite partie possédant au moins une cavité jouxtant ladite zone. Le pare-boue comprend une couche de matériau acoustiquement absorbant qui est fixée sur une face interne de la paroi de manière à recouvrir au moins partiellement la zone et une couche de matériau imperméable à l'eau et perméable à l'air qui est disposée entre la face interne de la paroi et la couche de matériau acoustiquement absorbant.

Ainsi configuré, le pare-boue de l'invention permettra d'atténuer efficacement les bruits de roulement tout en possédant une structure simple et peu coûteuse.

Le pare-boue de l'invention pourra également comprendre une ou plusieurs des caractéristiques suivantes :
- les trous possèdent une section sensiblement circulaire dont le diamètre est compris entre 2 mm et 5 mm.
- les trous sont disposés de manière uniforme dans la zone.
- les trous sont disposés selon un réseau comprenant une pluralité de lignes et de colonnes parallèles.
- les trous couvrent une surface comprise entre 3 % et 7 % de la surface totale de la zone.
- le matériau acoustiquement absorbant est choisi parmi les matériaux fibreux en fibres de verre et les matériaux non-tissés en fibres de polyester.
- la couche de matériau imperméable à l'eau et perméable à l'air est fixée sur la face interne de la paroi.
- la couche de matériau imperméable à l'eau et perméable à l'air est solidaire de la couche de matériau acoustiquement absorbant.
- les couches de matériau imperméable à l'eau et perméable à l'air et de matériau acoustiquement absorbant forment une seule couche.

L'invention concerne également un véhicule automobile équipé d'au moins un pare-boue tel que défini ci-dessus.

Dans une configuration particulière de l'invention, le véhicule de l'invention pourra comprendre au moins une roue avant autour de laquelle est disposé un pare-boue tel que défini ci-dessus, une paroi du pare-boue fermant au moins une cavité ouverte vers l'avant formée dans la caisse du véhicule, ladite paroi étant munie d'une pluralité de trous dans une zone jouxtant ladite cavité.

Dans une autre configuration particulière de l'invention, la cavité possèdera une profondeur comprise entre 10 mm et 80 mm.

L'invention est décrite ci-après en référence aux dessins annexés représentant, à titre d'exemples non limitatifs, plusieurs modes de réalisation particuliers de ce pare-boue.
Figure 1 est une vue de côté de la partie avant d'un véhicule équipé d'un pare-boue conventionnel.
Figure 2 est une vue schématique en coupe longitudinale d'un pare-boue conventionnel, dans sa position montée à l'intérieur d'un passage de roue.
Figure 3 est une vue similaire à la figure 2, dans le cas d'un pare-boue selon un premier mode de réalisation.
Figure 4 est une vue similaire à la figure 2, dans le cas d'un pare-boue selon un deuxième mode de réalisation.
Figure 5 est une vue similaire à la figure 2, dans le cas d'un pare-boue selon un troisième mode de réalisation, selon l'invention.
Figure 6 est une vue en perspective partielle du pare-boue représenté sur la figure 3.
Figure 7 est une vue en perspective partielle du pare-boue représenté sur la figure 4.
Figure 8 est une vue similaire à la figure 7, une partie de la caisse du véhicule jouxtant le pare-boue étant représentée.
Figure 9 représente des courbes d'absorption de signaux acoustiques pour plusieurs exemples de pare-boue selon l'invention et, en comparaison, la courbe d'absorption de signaux acoustiques d'un pare-boue conventionnel.

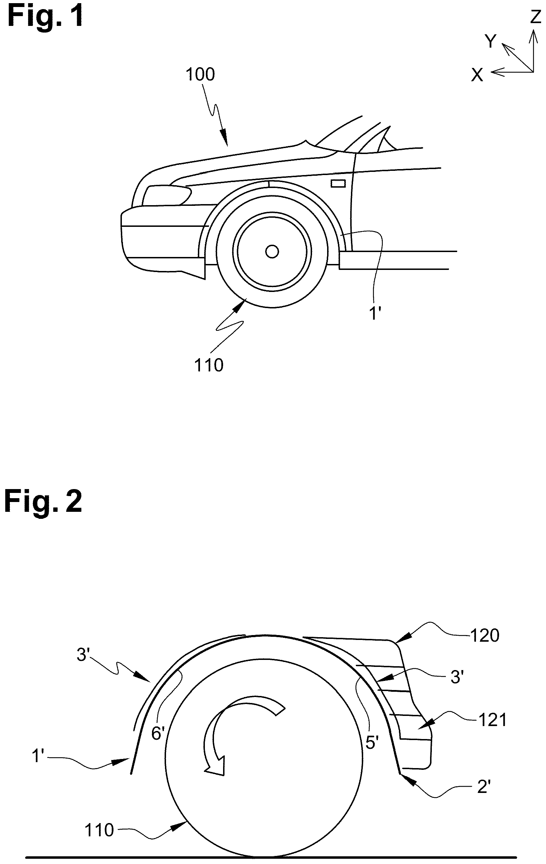

Dans la description qui va suivre, la direction longitudinale se réfère à la longueur du véhicule, soit à l'axe X représenté sur la figure 1. L'axe transversal, ou l'axe Y représenté sur la figure 1, est perpendiculaire à la direction longitudinale. L'avant correspond au sens principal de déplacement du véhicule. L'arrière est opposé à l'avant.

En référence à la figure 1, il est représenté la partie avant d'un véhicule automobile 100 équipé d'un pare-boue 1' conventionnel. Ce pare-boue 1' est monté sur la caisse du véhicule 100 et est disposé autour d'une des roues avant 110 de telle sorte à entourer la moitié supérieure de la roue avant 110. Ainsi disposé, le pare-boue 1' empêche la boue ou les graviers projetés par la roue avant 110 sous l'effet de la force centrifuge de venir salir la partie de la caisse entourant la roue avant 110. Par ailleurs, du fait de la structure plastique du pare-boue 1', les bruits générés par l'impact des graviers sur le pare-boue 1' sont atténués par rapport à ceux qui seraient générés si les graviers impactaient directement la caisse. Toutefois, ce type de pare-boue 1' conventionnel ne permet pas d'atténuer efficacement les ondes acoustiques générées par la roue avant 110 lors de son contact avec la chaussée.

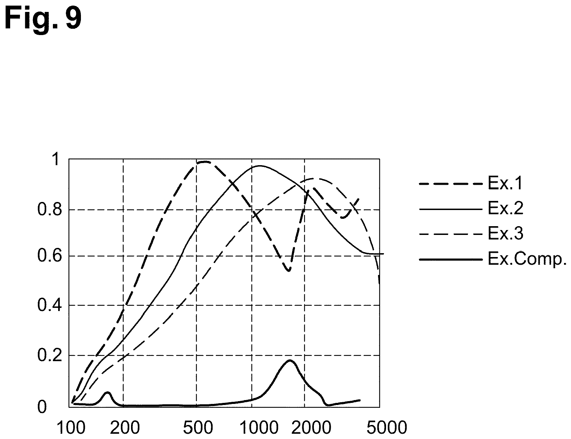

En référence à la figure 2, il est représenté un pare-boue 1' conventionnel tel que monté dans un passage de roue. Ce pare-boue 1' est formé d'une coque 2' en matériau thermoplastique, ladite coque 2' s'étendant selon sa direction longitudinale suivant une ligne directrice formant un demi-cercle et présentant une paroi supérieure 5' arrière et une paroi supérieure 6' avant. La paroi supérieure 5' arrière jouxte une partie 120 de la caisse du véhicule et est disposée en regard de la surface de roulement d'une roue avant 110. La partie 120 de la caisse possède plusieurs sections contiguës en U, chacune des sections formant une cavité 121 ouverte vers l'avant. Les faces internes des parois supérieures 5' et 6' sont recouvertes chacune d'une couche 3' de matériau acoustiquement absorbant de telle sorte que l'une des couches 3' ferme plusieurs des cavités 121. Les cavités 121 ainsi fermées sont en communication fluidique avec l'extérieur par l'intermédiaire de la couche 3'. Ainsi, lorsque le véhicule est en mouvement, les ondes acoustiques dues au roulement de la roue 110 sur le sol pénètrent dans la cavité 121 au travers de la couche 3'. Le rayonnement acoustique dû au roulement, c'est-à-dire les ondes se propageant dans l'air, est alors au moins partiellement absorbé par la couche 3'. Toutefois, cette absorption est relativement faible comme analysé plus loin au vu du diagramme de la figure 9.

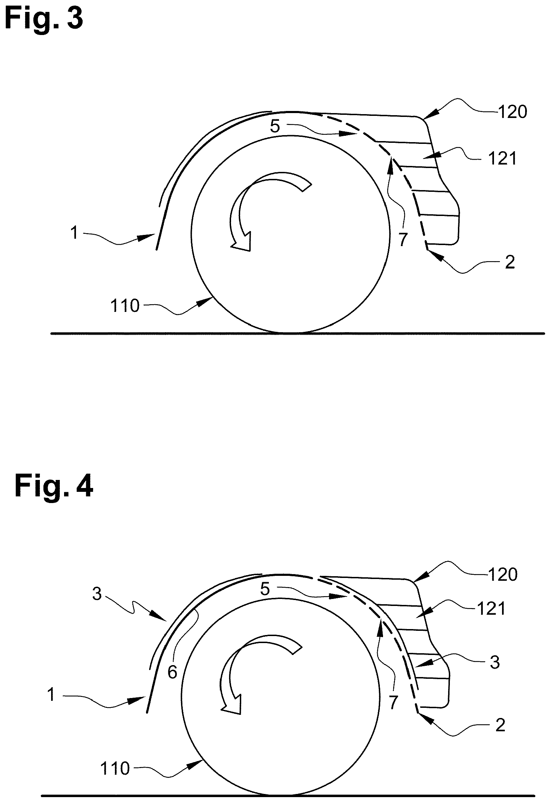

En référence aux figures 3 à 8, il est représenté plusieurs modes de réalisation d'un pare-boue 1 selon l'invention.

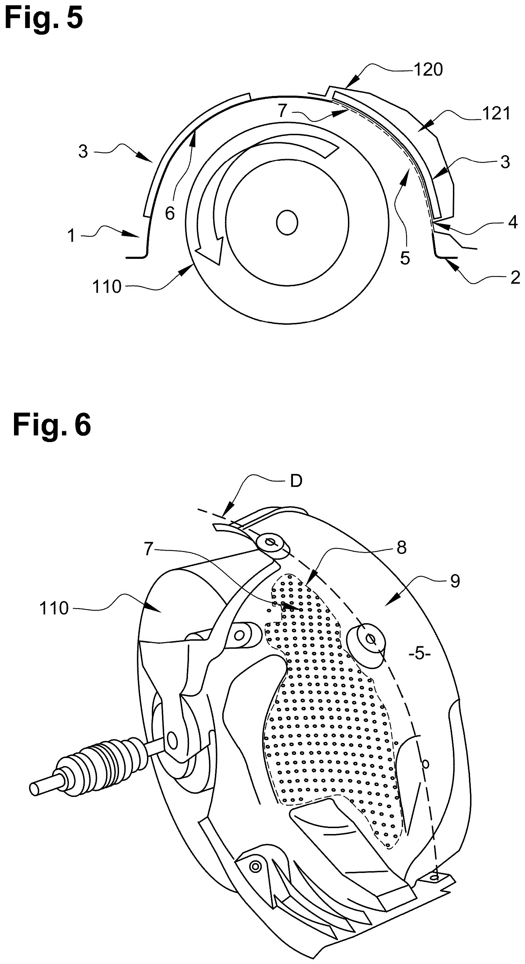

Dans le mode de réalisation représenté sur les figures 3 et 6, le pare-boue 1 est formé d'une coque 2 en matériau thermoplastique, ladite coque 2 s'étendant selon sa direction longitudinale suivant une ligne directrice D formant un demi-cercle et présentant une paroi supérieure 5 arrière. Cette paroi 5 jouxte une partie 120 de la caisse du véhicule et est disposée en regard de la surface de roulement d'une roue avant 110 lorsque le pare-boue 1 est monté sur le véhicule. Le matériau constitutif de la coque 2 pourra être du polypropylène. La paroi 5 est munie d'une pluralité de trous 7 traversants, lesdits trous 7 étant disposés de manière uniforme dans une zone spécifique 8 de la paroi 5, ladite zone 8 étant contiguë à une zone non trouée 9 de la paroi 5 qui est orientée vers l'intérieur du véhicule. Dans le mode de réalisation représenté, les trous 7 sont disposés selon un réseau comprenant une pluralité de lignes et de colonnes parallèles. De manière avantageuse, les trous 7 couvrent une surface comprise entre 3 % et 7 % de la surface totale de la zone spécifique 8. Ils possèdent de préférence une section sensiblement circulaire dont le diamètre est compris entre 2 et 5 mm. La partie 120 de la caisse possède plusieurs sections contiguës en U, chacune des sections formant une cavité 121 ouverte vers l'avant. Le pare-boue 1 est fixé sur cette partie 120 de telle sorte que la paroi 5 ferme plusieurs des cavités 121. Les cavités 121 ainsi fermées sont en communication fluidique avec l'extérieur par l'intermédiaire des trous 7 de la paroi 5. Ainsi, lorsque le véhicule est en mouvement, les ondes acoustiques dues au roulement de la roue 110 sur le sol pénètrent dans la cavité 121 au travers des trous 7 et sont ensuite piégées dans celle-ci. Le rayonnement acoustique dû au roulement, c'est-à-dire les ondes se propageant dans l'air, est alors au moins partiellement absorbé par l'ensemble formé par la cavité 121 et les trous 7. Cet ensemble fonctionne sur le principe d'un résonateur de Helmholtz. Ce résonateur de Helmholtz sera notamment configuré pour absorber efficacement des ondes de fréquences allant de 500 Hz à 5000 Hz. Le coefficient d'absorption d'un tel résonateur dépendra de la fréquence des ondes, mais également du diamètre des trous 7, de leur densité surfacique, de l'épaisseur de la paroi 5, ainsi que du volume de la cavité 121.

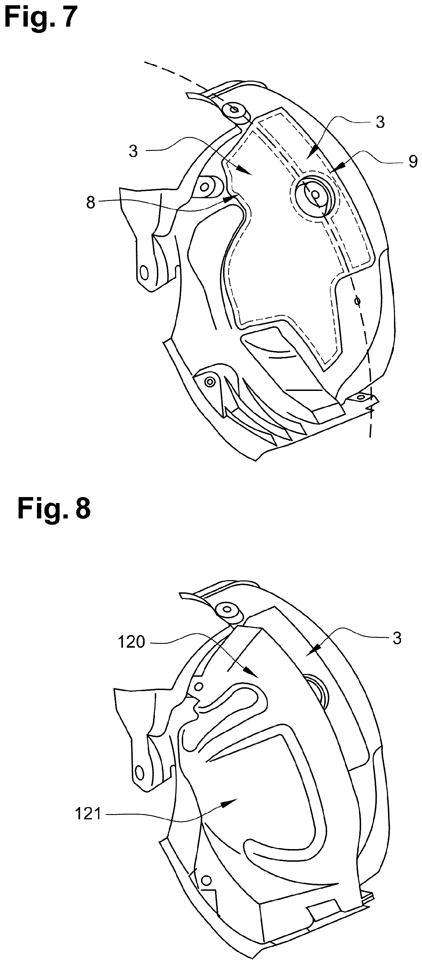

Le mode de réalisation représenté sur les figures 4, 7 et 8 diffère du précédent par le fait de comprendre une couche additionnelle 3 de matériau acoustiquement absorbant qui sera fixée sur une face interne de la paroi 5 de manière à recouvrir totalement ou partiellement la zone spécifique 8. Comme représenté sur la figure 7, la couche 3 pourra également couvrir une partie de la zone 9 de la paroi 5 qui n'est pas munie de trous. Comme représenté sur la figure 4, une autre couche 3 pourra également couvrir une partie de la face interne de la paroi supérieure 6 avant de la coque 2. La couche 3 vise à améliorer encore l'atténuation acoustique des bruits de roulement. La couche 3 pourra être constituée de fibres de verre ou de fibres de polyester. Elle sera fixée sur la paroi 5 par collage, par soudage par ultrasons, ou par bouterollage par exemple. Elle aura un grammage compris entre 300 et 1000 g/m² dans le cas d'un matériau en fibres de verre et entre 200 et 600 g/m² dans le cas d'un matériau en fibres de polyester. Son épaisseur sera de préférence comprise entre 2 mm et 20 mm.

Le mode de réalisation représenté sur la figure 5 diffère du précédent par le fait de comprendre une couche additionnelle 4 de matériau imperméable à l'eau et perméable à l'air, ladite couche 4 étant disposée entre la face interne de la paroi 5 et la couche 3 de matériau acoustiquement absorbant. Cette couche 4 est destinée à éviter toute pénétration de liquide dans la cavité 121. Elle recouvrira de préférence totalement la zone spécifique 8. Dans une première variante de réalisation, elle pourra être fixée directement sur la paroi 5 par collage, par soudage par ultrasons, ou par bouterollage par exemple. Dans une deuxième variante de réalisation, elle sera solidarisée d'abord à la couche 3 avant de fixer l'ensemble formé des deux couches 3 et 4 sur la paroi 5. Dans une troisième variante de réalisation, la couche 4 sera le résultat d'un traitement chimique appliqué sur la couche 3 de manière à la rendre hydrophobe. Dans ce cas, la couche 3 et la couche 4 formeront une seule et même couche. La couche 4 pourra être constituée d'un non tissé ou d'un voile de verre ayant subi un traitement hydrophobe. La couche 4 possèdera une faible épaisseur, notamment comprise entre 0,5 mm et 2 mm. Elle possèdera une résistivité élevée. La couche 4 permettra notamment de mieux absorber les ondes acoustiques dans les basses fréquences, notamment les ondes acoustiques dont la fréquence est comprise entre 200 Hz et 1000 HZ, tout en réduisant légèrement l'effet absorbant dans les hautes fréquences, notamment pour des ondes acoustiques de fréquence supérieure à 2000 Hz.

Le diagramme de la figure 9 représente les variations du coefficient d'absorption des signaux acoustiques (en ordonnée) en fonction de la fréquence des ondes (en abscisse) pour plusieurs exemples de pare-boue selon l'invention et pour un exemple comparatif d'un pare-boue conventionnel. Ce diagramme est basé sur des calculs théoriques dans lesquels le coefficient d'absorption α est calculé en utilisant des codes de calcul existants dans le commerce. Dans ce calcul, le résonateur est assimilé à un empilement de couches comprenant successivement : la paroi perforée 5, la couche 4, la couche 3 et la cavité 121.Le champ acoustique utilisé est en champ diffus pour représenter le type d'excitation auquel est soumis le pare boue.

Pour tous les exemples, le pare-boue à analyser est constitué d'une plaque plane en polypropylène revêtue d'une couche de laine de verre de faible grammage sur sa face interne, ladite plaque jouxtant une cavité de 30 mm de profondeur. Pour l'exemple comparatif du pare-boue conventionnel, la plaque n'est pas trouée. En revanche, pour les exemples 1 à 3 selon l'invention, la plaque est munie de trous traversants, les trous possédant un diamètre d et un taux de couverture surfacique T qui diffèrent selon les exemples, de telle sorte que :
- dans l'exemple 1, d=2 mm et T=3 %,
- dans l'exemple 2, d=3 mm et T=7 %, et
- dans l'exemple 3, d=5 mm et T=3 %.

On constate donc que le pare-boue conventionnel ne présente pratiquement aucune absorption acoustique, mis à part entre 1000 Hz et 3000 Hz. En revanche, dans les exemples 1 à 3 selon l'invention, on observe une nette augmentation du coefficient d'absorption a, notamment dans la plage de fréquences allant de 500 Hz à 5000 Hz. En particulier, dans l'exemple 1, le coefficient d'absorption α est supérieur à 0,8 dans la plage de fréquences allant de 400 Hz à 1000 Hz.

## Revendications

1. Pare-boue (1) destiné à être fixé à l'intérieur d'un passage de roue de véhicule automobile, comprenant une coque (2) en matériau thermoplastique présentant une paroi (5) destinée à venir en regard de la surface de roulement de la roue, la paroi (5) comprenant au moins une zone (8) munie d'une pluralité de trous (7), ladite zone (8) étant destinée à former un résonateur de Helmholtz avec une partie (120) de la caisse du véhicule entourant au moins partiellement la coque (2), ladite partie (120) possédant au moins une cavité (121) jouxtant ladite zone (8), le pare-boue comprend une couche (3) de matériau acoustiquement absorbant est fixée sur une face interne de la paroi (5) de manière à recouvrir au moins partiellement la zone (8) et ledit pare-boue est **caractérisé en ce qu'**une couche (4) de matériau imperméable à l'eau et perméable à l'air est disposée entre la face interne de la paroi (5) et la couche (3) de matériau acoustiquement absorbant.

2. Pare-boue (1) selon la revendication 1, **caractérisé en ce que** les trous (7) possèdent une section sensiblement circulaire dont le diamètre est compris entre 2 mm et 5 mm.

3. Pare-boue (1) selon la revendication 1 ou 2, **caractérisé en ce que** les trous (7) sont disposés de manière uniforme dans la zone (8).

4. Pare-boue (1) selon la revendication 3, **caractérisé en ce que** les trous (7) sont disposés selon un réseau comprenant une pluralité de lignes et de colonnes parallèles.

5. Pare-boue (1) selon la revendication 3 ou 4, **caractérisé en ce que** les trous (7) couvrent une surface comprise entre 3 % et 7 % de la surface totale de la zone (8).

6. Pare-boue (1) selon l'une des revendications précédentes, **caractérisé en ce que** le matériau acoustiquement absorbant est choisi parmi les matériaux fibreux en fibres de verre et les matériaux non-tissés en fibres de polyester.

7. Pare-boue (1) selon l'une des revendications précédentes, **caractérisé en ce que** la couche (4) de matériau imperméable à l'eau et perméable à l'air est fixée sur la face interne de la paroi (5).

8. Pare-boue (1) selon l'une des revendications 1 à 6, **caractérisé en ce que** la couche (4) de matériau imperméable à l'eau et perméable à l'air est solidaire de la couche (3) de matériau acoustiquement absorbant.

9. Pare-boue (1) selon l'une des revendications 1 à 6, **caractérisé en ce que** les couches (3, 4) de matériau imperméable à l'eau et perméable à l'air et de matériau acoustiquement absorbant forment une seule couche.

10. Véhicule (100) automobile équipé d'au moins un pare-boue (1) selon l'une des revendications précédentes.

11. Véhicule (100) selon la revendication 10, **caractérisé en ce qu'**il comprend au moins une roue avant (110) autour de laquelle est disposé un pare-boue (1) selon l'une des revendications 1 à 9, une paroi (5) du pare-boue (1) fermant au moins une cavité (121) ouverte vers l'avant formée dans la caisse du véhicule, ladite paroi (5) étant munie d'une pluralité de trous (7) dans une zone (8) jouxtant ladite cavité (121).

12. Véhicule (100) selon la revendication 11, **caractérisé en ce que** la cavité (121) possède une profondeur comprise entre 10 mm et 80 mm.

## Patentansprüche

1. Schmutzfänger (1), der dazu bestimmt ist, im Inneren eines Radkastens eines Kraftfahrzeugs befestigt zu werden, umfassend eine Hülle (2) aus thermoplastischem Material, die eine Wand (5) aufweist, die dazu bestimmt ist, zur Lauffläche des Rads gewandt zu werden, wobei die Wand (5) mindestens eine mit einer Vielzahl von Löchern (7) versehene Zone (8) umfasst, wobei die Zone (8) dazu bestimmt ist, einen Helmholtz-Resonator mit einem die Hülle (2) mindestens teilweise umgebenden Teil (120) der Fahrzeugkarosserie zu bilden, wobei der Teil (120) mindestens einen Hohlraum (121) aufweist, der an die Zone (8) angrenzt, wobei der Schmutzfänger eine Lage (3) aus akustisch absorbierendem Material aufweist, die so an einer Innenfläche der Wand (5) befestigt ist, dass sie mindestens teilweise die Zone (8) bedeckt, und der Schmutzfänger ist **dadurch gekennzeichnet, dass** eine Lage (4) aus wasserundurchlässigem und luftdurchlässigem Material zwischen der Innenfläche der Wand (5) und der Lage (3) aus akustisch absorbierendem Material angeordnet ist.

2. Schmutzfänger (1) nach Anspruch 1, **dadurch gekennzeichnet, dass** die Löcher (7) einen im Wesentlichen kreisförmigen Querschnitt aufweisen, dessen Durchmesser im Wesentlichen zwischen 2 mm und 5 mm liegt.

3. Schmutzfänger (1) nach Anspruch 1 oder 2, **dadurch gekennzeichnet, dass** die Löcher (7) in der Zone (8) auf gleichförmige Weise angeordnet sind.

4. Schmutzfänger (1) nach Anspruch 3, **dadurch gekennzeichnet, dass** die Löcher (7) entlang eines Rasters angeordnet sind, das eine Vielzahl von parallelen Linien und Spalten umfasst.

5. Schmutzfänger (1) nach Anspruch 3 oder 4, **dadurch gekennzeichnet, dass** die Löcher (7) eine Fläche bedecken, die zwischen 3 % und 7 % der Gesamtfläche der Zone (8) umfasst.

6. Schmutzfänger (1) nach einem der vorangehenden Ansprüche, **dadurch gekennzeichnet, dass** das akustisch absorbierende Material aus Fasermaterialen aus Glasfaser und Vliesmaterialien aus Polyesterfasern ausgewählt ist.

7. Schmutzfänger (1) nach einem der vorangehenden Ansprüche, **dadurch gekennzeichnet, dass** die Lage (4) aus wasserundurchlässigem und luftdurchlässigem Material an der Innenfläche der Wand (5) befestigt ist.

8. Schmutzfänger (1) nach einem der Ansprüche 1 bis 6, **dadurch gekennzeichnet, dass** die Lage (4) aus wasserundurchlässigem und luftdurchlässigem Material einstückig mit der Lage (3) aus akustisch absorbierendem Material ist.

9. Schmutzfänger (1) nach einem der Ansprüche 1 bis 6, **dadurch gekennzeichnet, dass** die Lagen (3, 4) aus wasserundurchlässigem und luftdurchlässigem Material und aus akustisch absorbierendem Material eine einzige Lage bilden.

10. Kraftfahrzeug (100), das mit mindestens einem Schmutzfänger (1) nach einem der vorangehenden Ansprüche ausgestattet ist.

11. Fahrzeug (100) nach Anspruch 10, **dadurch gekennzeichnet, dass** es mindestens ein Vorderrad (110), um das ein Schmutzfänger (1) nach einem der Ansprüche 1 bis 9 angeordnet ist, umfasst, wobei eine Wand (5) des Schmutzfängers (1) mindestens einen in der Fahrzeugkarosserie gebildeten nach vorne offenen Hohlraum (121) schließt, wobei die Wand (5) mit einer Vielzahl von Löchern (7) in einer an den Hohlraum (121) angrenzenden Zone (8) versehen ist.

12. Fahrzeug (100) nach Anspruch 11, **dadurch gekennzeichnet, dass** der Hohlraum (121) eine Tiefe zwischen 10 mm und 80 mm aufweist.

## Claims

1. A mudguard (1) intended to be fastened inside a motor vehicle wheel arch, comprising a shell (2) made of a thermoplastic material having a wall (5) intended to lie opposite the tread of the wheel, the wall (5) comprising at least one area (8) provided with a plurality of holes (7), said area (8) being intended to form a Helmholtz resonator with a portion (120) of the body of the vehicle surrounding the shell (2) at least partially, said portion (120) having at least one cavity (121) adjoining said area (8), the mudguard comprises a layer (3) of an acoustically-absorbent material which is fastened on an inner face of the wall (5) so as to cover the area (8) at least partially and said mudguard is **characterized in that** a layer (4) of a water-impermeable and air-permeable material is disposed between the inner face of the wall (5) and the acoustically-absorbent material layer (3).

2. The mudguard (1) according to claim 1, **characterized in that** the holes (7) have a substantially circular section whose diameter is comprised between 2 mm and 5 mm.

3. The mudguard (1) according to claim 1 or 2, **characterized in that** the holes (7) are evenly disposed in the area (8).

4. The mudguard (1) according to claim 3, **characterized in that** the holes (7) are disposed according to a network comprising a plurality of parallel lines and columns.

5. The mudguard (1) according to claim 3 or 4, **characterized in that** the holes (7) cover a surface area comprised between 3% and 7% of the total surface area of the area (8).

6. The mudguard (1) according to any of the preceding claims, **characterized in that** the acoustically-absorbent material is selected from fibrous materials made of glass fibers and non-woven materials made of polyester fibers.

7. The mudguard (1) according to any of the preceding claims, **characterized in that** the layer (4) of water-impermeable and air-permeable material is fastened on the inner face of the wall (5).

8. The mudguard (1) according to any of claims 1 to 6, **characterized in that** the layer (4) of water-impermeable and air-permeable material is secured to the acoustically-absorbent material layer (3).

9. The mudguard (1) according to any of claims 1 to 6, **characterized in that** the layers (3, 4) of water-impermeable and air-permeable material and of acoustically absorbent material form a single layer.

10. A motor vehicle (100) equipped with at least one mudguard (1) according to any of the preceding claims.

11. The vehicle (100) according to claim 10, **characterized in that** it comprises at least one front wheel (110) around which a mudguard (1) according to any of claims 1 to 9 is disposed, a wall (5) of the mudguard (1) closing at least one cavity (121) open at the front formed in the body of the vehicle, said wall (5) being provided with a plurality of holes (7) in an area (8) adjoining said cavity (121).

12. The vehicle (100) according to claim 11, **characterized in that** the cavity (121) has a depth comprised between 10 mm and 80 mm.
